# EUROPEAN PATENT APPLICATION

(11) **EP 4 446 928 A1**
(43) Date of publication of application: **16.10.2024**
(21) Application number: 22904005.0
(22) Date of filing: 21.11.2022
(51) Int. Cl.: G06F 30/12, G06F 30/18, G06F 113/14

(54) **PIPING DESIGN ASSISTANCE DEVICE**

(30) Priority: 08.12.2021 JP 2021199490
(71) Applicant: Kubota Corporation, Osaka-shi, Osaka 556-8601 (JP)
(72) Inventor: TAKAHASHI, Shimpei, Sakai-shi, Osaka 590-0908 (JP); HAYASHI, Mitsuo, Tokyo 104-8307 (JP)
(74) Representative: Betten & Resch
(86) International application number: PCT/JP2022/042975
(87) International publication number: WO 2023/106074

(57) **Abstract**

A piping design support device that updates a laying route of a newly laid pipeline to be connected to an existing pipeline, including: a guide screen generation unit that generates a guide screen to guide detour design information necessary for generating a detour route to make a detour around an obstacle when the obstacle exists in the laying route set in advance; a detour design information input processing unit that displays the guide screen generated by the guide screen generation unit to prompt input of the detour design information; a detour route generation processing unit that generates and displays the detour route based on the detour design information input in the detour design information input processing unit; and a laying route update processing unit that updates an original laying route with the detour route generated by the detour route generation processing unit.

## Description

### Technical Field

The present invention relates to a piping design support device.

### Background Art

When connecting a new pipeline to an existing pipeline (established pipeline or designed pipeline) such as water supply and sewerage systems, it is necessary to lay the new pipeline in accordance with environment of an installation target area. For example, if an unidentified buried object exists in the installation target area as an obstacle, design of a laying route of a pre-designed pipeline to be newly laid should be updated with detour piping, for example, under-passing piping, using fittings such as a fitting (bent pipe), and a straight pipe on site.

Specifically, if an unidentified buried object is found on site during construction, it is necessary to proceed with piping work by arranging and laying fittings such as a fitting (bent pipe) to avoid the obstacle. However, designing of detour piping such as under-passing piping requires much time even for an experienced designer to secure a proper distance to the obstacle, etc., and thus it has been impossible to quickly and easily deal with it on site.

Patent Literature 1 discloses a method for designing piping to connect one pipeline to the other pipeline, including: preparing a plurality of types of piping patterns consisting of a plurality of pipes that can be arranged between the one pipeline and the other pipeline; selecting a given piping pattern corresponding to an installation state of the one pipeline and the other pipeline; and determining specifications of the selected piping pattern and the plurality of pipes constituting this piping pattern depending on the installation state of the one pipeline and the other pipeline.

The method for designing piping is utilized in a piping design support device including: a database in which map information regarding an installation target area and data on various pipe materials are stored; and a computer equipped with a CAD function to generate a piping diagram and the like of a pipeline to be laid in the installation target area using the pipe materials selected from the database.

### Citation List

### Patent Literature

Patent Literature 1: Japanese Unexamined Patent Application Publication No. 2007-328550

### Summary of Invention

### Technical Problem

However, in the piping design support device using the method for designing piping disclosed in Patent Literature 1, it is required to select any of the plurality of types of piping patterns prepared in advance, and it is not always possible to design a detour with an appropriate pipeline for various obstacles found in a laying site.

Described is a problem faced when dealing with the situation on site, using the established pipeline as an example of the existing pipeline. Similarly, when designing a new pipeline to be connected to the designed pipeline, it is difficult to design a detour pipeline that can flexibly deal with a buried object (if present) in the installation target area as an obstacle by the conventional piping design support device as described above.

In view of the above-described problem, an object of the present invention is to provide a piping design support device that is capable of quickly and properly designing a detour pipeline depending on a size and a position of an obstacle buried underground.

### Solution to Problem

To achieve the above-described object, as a first feature of the piping design support device according to the present invention, the piping design support device that updates a laying route of a newly laid pipeline to be connected to an existing pipeline includes: a guide screen generation unit that generates a guide screen to guide detour design information necessary for generating a detour route to make a detour around an obstacle when the obstacle exists in the laying route set in advance; a detour design information input processing unit that displays the guide screen generated by the guide screen generation unit to prompt input of the detour design information; a detour route generation processing unit that generates and displays the detour route based on the detour design information input in the detour design information input processing unit; and a laying route update processing unit that updates an original laying route with the detour route generated by the detour route generation processing unit.

The guide screen generated by the guide screen generation unit is displayed through the detour design information input processing unit. Since the detour design information necessary for generating the detour route to make a detour around the obstacle is presented to an operator as a designer through the guide screen, the operator may acquire and input the necessary detour design information. The detour route is automatically generated and displayed by the detour route generation processing unit based on the input detour design information, allowing the operator to visually confirm the detour route. When there is no problem, the original laying route is updated with the detour route by the laying route update processing unit. That is, by inputting necessary information to a detour design information field displayed on the guide screen, it is possible to obtain a detour pipeline quickly and properly.

In addition to the first feature described above, the piping design support device according to the present invention has a second feature that a reference plane is preset according to an aspect of the detour route, and the detour design information guided by the guide screen includes: obstacle location information indicating a relative position of the obstacle to the reference plane; detour route location information indicating a relative position of the detour route including at least one bending point at a relative position to the reference plane so as to be able to avoid the obstacle; and pipe type information including at least an angle of a fitting and joint information constituting the detour route.

It is necessary to vary the aspect of the detour route depending on the obstacle. For example, when a burial depth of the obstacle is shallow, under-passing piping with a pipe laid below the obstacle is applied; when the burial depth of the obstacle is deep, over-passing piping with a pipe laid above the obstacle is applied; and when the obstacle is buried in a vertical direction, horizontal piping is applied to horizontally make a detour around the obstacle. Additionally, there is composite angle piping in horizontal and vertical which is a combination of the under-passing piping or the over-passing piping and the horizontal piping to make a detour around the obstacle in a diagonal direction that combines both depth and horizontal directions.

A predetermined reference plane is set according to the respective aspects of the detour route. Once the obstacle location information indicating the relative position of the obstacle to the reference plane, the detour route location information indicating the relative position of the detour route including at least one bending point at the relative position to the reference plane so as to be able to avoid the obstacle, and the pipe type information including at least the angle of the fitting and the joint information constituting the detour route are determined as the detour design information, a laying position of the detour route is determined based on the reference plane.

In addition to the second feature described above, the piping design support device according to the present invention has a third feature that the detour route generation processing unit calculates a route length of the detour route based on the detour design information, and arranges the fitting at the bending point of the detour route and a straight pipe and a cut pipe in a section excluding the fitting, thereby generating the detour route.

Based on the detour design information set for the respective aspects of the detour route, the specific detour route, in other words, the route length, the angle of the fitting and a type of the joint arranged at the bending point, the numbers and the lengths of the straight pipe and the cut pipe except the fitting are determined.

In addition to the third feature described above, the piping design support device according to the present invention has a fourth feature that the detour route generation processing unit outputs a warning to an operator when a length of a cut pipe constituting the detour route is shorter than a predetermined minimum length, and prompts the operator to update the detour design information.

When the length of the cut pipe included in the generated specific detour route is shorter than the predetermined minimum length, the warning recognizable by the operator is output, and the operator recognizing the warning updates the detour design information so that a new detour route can be generated.

In addition to any of the second to fourth features described above, the piping design support device according to the present invention has a fifth feature that in a case that an aspect of the detour route is an under-passing or an over-passing, the reference plane is set to a ground; in a case that the aspect of the detour route is a horizontal, the reference plane is set to a vertical plane perpendicular to the ground; and in a case that the aspect of the detour route is a composite angle in horizontal and vertical, the reference plane is set to an inclined plane at a given angle to the ground or the vertical plane perpendicular to the ground.

In the under-passing piping and the over-passing piping, the reference plane is set to the ground; in the horizontal piping, the reference plane is set to a predetermined vertical plane; and in the composite angle piping in horizontal and vertical, the reference plane is set to an inclined plane at a given angle to the ground or the vertical plane perpendicular to the ground. For the respective reference planes, the obstacle location information, the detour route location information, the pipe type information including the angle of the fitting and the joint information, and the like are set.

### Advantageous Effects of Invention

As described above, according to the present invention, it is possible to provide the piping design support device that is capable of quickly and properly designing a detour pipeline depending on a size and a position of an obstacle buried underground.

### Brief Description of Drawings

Fig. 1 illustrates a piping design support device according to the present invention.
Fig. 2A illustrates a route of a main pipe and a branch pipe connecting designated intersection points, and Fig. 2B illustrates a piping diagram automatically generated by a piping design support device.
Fig. 3 is a flowchart illustrating a procedure for generating a piping diagram using the piping design support device according to the present invention.
Fig. 4A illustrates an under-passing, showing an aspect of a detour route; Fig. 4B illustrates an over-passing, showing the aspect of the detour route; and Fig. 4C illustrates a horizontal showing the aspect of the detour route.
Fig. 5 is a flowchart illustrating a procedure for generating a detour route using the piping design support device according to the present invention.
Fig. 6 illustrates a guide screen to guide detour design information.
Fig. 7 illustrates a procedure for generating a detour route.
Fig. 8 illustrates a procedure for generating a detour route.
Fig. 9A illustrates a first procedure for generating a detour route, Fig. 9B illustrates a second procedure for generating a detour route, and Fig. 9C illustrates a third procedure for generating a detour route.

### Best Mode for Carrying out the Invention

Hereinafter, the piping design support device according to the present invention will be described based on the drawings.

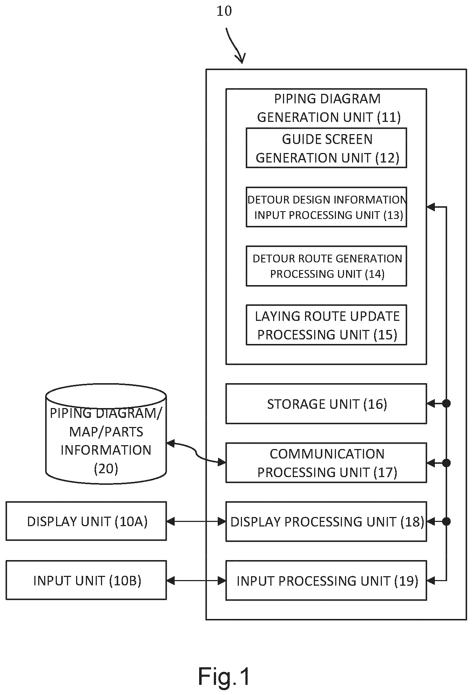

Fig. 1 illustrates a functional block configuration of a piping design support device 10. The piping design support device 10 is configured with a tablet computer equipped with a liquid crystal display type display unit 10A and a touch panel type input unit 10B.

Provided on a control board housed in a main body are a CPU, a storage unit 16, an input/output circuit, a communication interface circuit, and the like, where an application program for supporting piping design stored in the storage unit 16 is executed on the CPU, thereby realizing a function of the piping design support device 10.

In other words, the piping design support device 10 includes a piping diagram generation unit 11, the storage unit 16, a communication processing unit 17, a display processing unit 18, an input processing unit 19, and the like. The communication processing unit 17 has a function to wirelessly connect with an external database 20 to acquire piping information such as an existing piping diagram, a map, and information regarding pipe parts and the like necessary for designing piping from the database 20, and store information regarding newly designed piping. The display processing unit 18 controls to display necessary information through the display unit 10A, and the input processing unit 19 controls to process operated information through the input unit 10B.

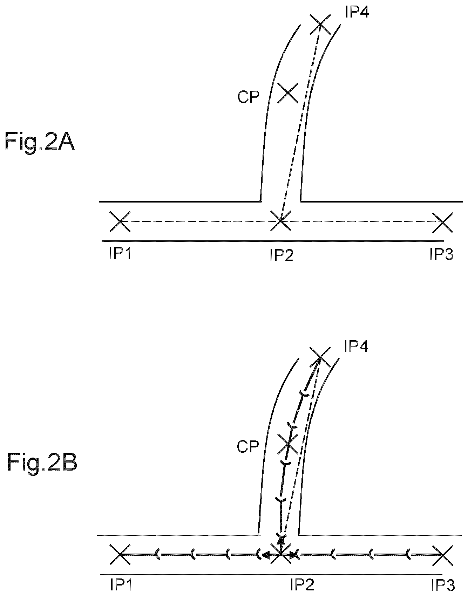

The piping diagram generation unit 11 is a functional block to connect a plurality of intersection points IP (IP1, IP2, IP3, and IP4 in Fig. 2A) between a start point and an end point designated on a road on the map displayed on the display unit 10A, and automatically generate a piping diagram (see Fig. 2B) of a pipeline (the pipeline referred to as a planned line) passing through a control point CP (CP in Fig. 2A) selectively designated between the respective intersection points IP.

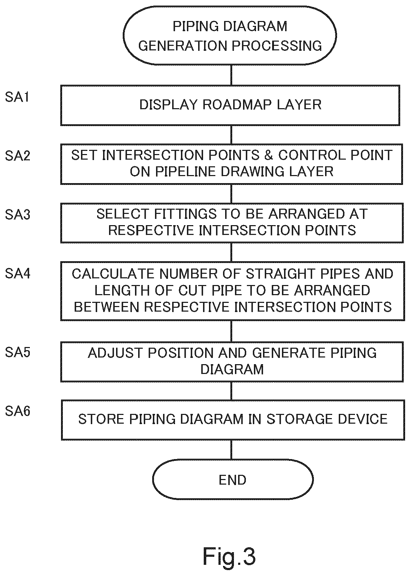

As shown in Fig. 3, the piping diagram generation unit 11 displays a roadmap on a map layer (SA1) and sets the intersection points IP and the necessary control point CP on a pipeline drawing layer to be superimposed on the map layer (SA2) in accordance with operation by an operator. The control point CP is designated in such a case of laying a pipeline in a gentle curve along a road, etc.

Fittings to be arranged at the respective intersection points IP are selected from the database 20 and arranged (SA3), and the number of straight pipes and lengths of the cut pipes to be arranged between the respective intersection points IP are calculated and then arranged accordingly (SA4). The number of the straight pipes is determined by a quotient obtained by dividing a length between the adjacent intersection points IP by a length of one straight pipe, and a length of a cut pipe is determined by a remainder. A piping diagram is generated by bending and arranging the straight pipes within a predetermined allowable range of an angle such that the straight pipes pass through the control point CP (SA5). An attribute, a laying position (coordinates), and the like of each pipe laid along the planned line in this manner are listed and stored together with the piping diagram in the storage unit 16 (SA6).

Although not described in detail, it should be noted that operation commands such as designation of the intersection point IP, designation of the control point CP, and arrangement of the pipe are displayed in a selectable manner on the display unit 10A for easy operation by the operator. The operator can touch a corresponding display area to switch a mode to a designation mode of the intersection point IP or a designation mode of the control point CP, and touch a predetermined position on the roadmap to input the intersection point IP or the control point CP. Furthermore, when arranging the fittings at the intersection point IP, options of the fittings are displayed and the operator touches a corresponding display area to identify the fittings to be arranged. An operation interface is constructed to automatically generate the piping diagram when the operator selects the operation commands displayed on the display unit 10A.

At a construction site, laying work is performed to connect a new pipe to established piping in accordance with the piping diagram displayed on the display unit 10A. However, an unexpected and unidentified buried object may be found underground, and such buried object may become an obstacle to laying in accordance with the piping diagram. For example, there may be a case that upon installation of a pipe for a water supply service, it will interfere with established gas piping, or interferes with a manhole or a sewer pipe.

In preparation for such case, the piping diagram generation unit 11 is equipped with respective functional blocks of a guide screen generation unit 12, a detour design information input processing unit 13, a detour route generation processing unit 14, and a laying route update processing unit 15.

The guide screen generation unit 12 generates a guide screen to guide detour design information necessary for generating a detour route to make a detour around the obstacle. The detour design information input processing unit 13 displays the guide screen generated in the guide screen generation unit 12 to prompt the operator to input the detour design information.

The detour route generation processing unit 14 generates and displays the detour route based on the detour design information input in the detour design information input processing unit 13. The laying route update processing unit 15 updates an original laying route with the detour route generated by the detour route generation processing unit 14, or adds a new laying route.

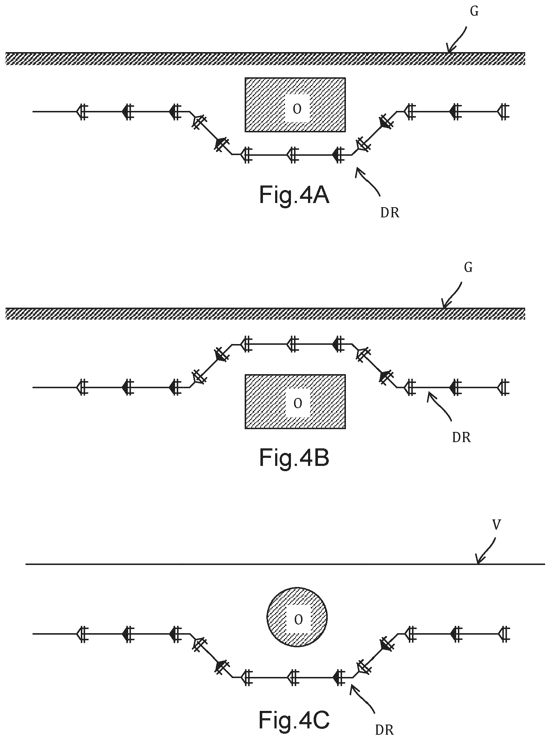

Figs. 4A-C illustrate aspects of the detour route. A sign G denotes a ground, a sign O denotes an obstacle, and a sign DR denotes a detour route. Fig. 4A illustrates under-passing piping (also simply referred to as "under-passing") with the detour route DR set below the underground obstacle O, Fig. 4B illustrates over-passing piping with the detour route DR set above the underground obstacle O, and Fig. 4C illustrates horizontal piping with the detour route DR set horizontally next to the underground obstacle O. In addition to these, there is composite angle piping in horizontal and vertical which combines the under-passing piping and the horizontal piping or the over-passing piping and the horizontal piping. The composite angle piping in horizontal and vertical refers to piping that takes a detour from diagonally above or below the obstacle O.

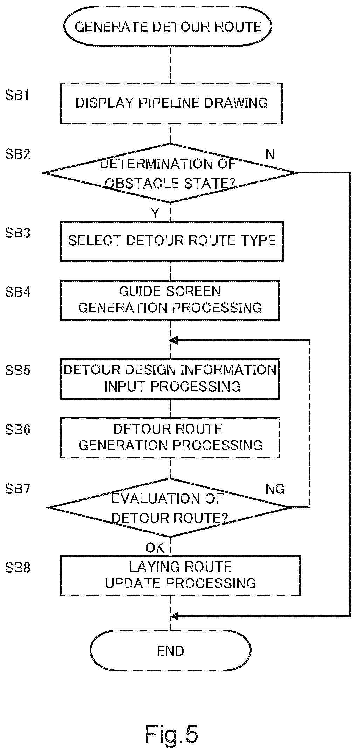

Fig. 5 illustrates a procedure for designing detour piping using the piping design support device 10. It is a procedure for designing a detour pipeline in a case that an unidentified buried object is found during excavation work at a pipe laying site, and the buried object becomes an obstacle to laying a new pipe.

When a pipeline drawing of existing pipeline and newly laid pipeline is displayed on the display unit 10A and an obstacle is found in the course of proceeding with laying work (SB1), an operator as a designer determines a state of the obstacle based on a measurement result of a size and a burial depth of the obstacle (SB2).

When the operator determines that a detour route should be generated because a designed piping route and the obstacle interfere with each other or a sufficient separation distance cannot be secured, the operator selects (touches) established piping as a connection start point of the detour route displayed on the display unit 10A, and touches a display section of a detour route generation command displayed on a command display unit (SB2, Y).

The detour route generation command is executed to display a detour route type selection screen on the display unit 10A, and any of a plurality of display sections indicating a detour route type is selected by the operator (SB3). While a case of selecting the under-passing piping is described in the present embodiment, the same processing will be performed in a case of selecting the other detour route types.

The guide screen generation unit 12 is activated to generate the guide screen corresponding to the under-passing piping (SB4), the guide screen is displayed on the display unit 10A by the detour design information input processing unit 13, and the detour design information is input by the operator (SB5).

The detour route automatically generated by the detour route generation processing unit 14 based on the input detour design information is displayed on the display unit 10A (SB6), such that the operator can visually confirm the detour route through the display unit 10A. When there is no problem (SB7, OK), the original laying route is updated with the detour route by the laying route update processing unit 15 (SB8). When there is a problem (SB7, NG), a warning appears on the display unit 10A and the procedure returns to step SB5. That is, by inputting necessary information to a detour design information field displayed on the guide screen, it is possible to obtain the detour pipeline quickly and properly.

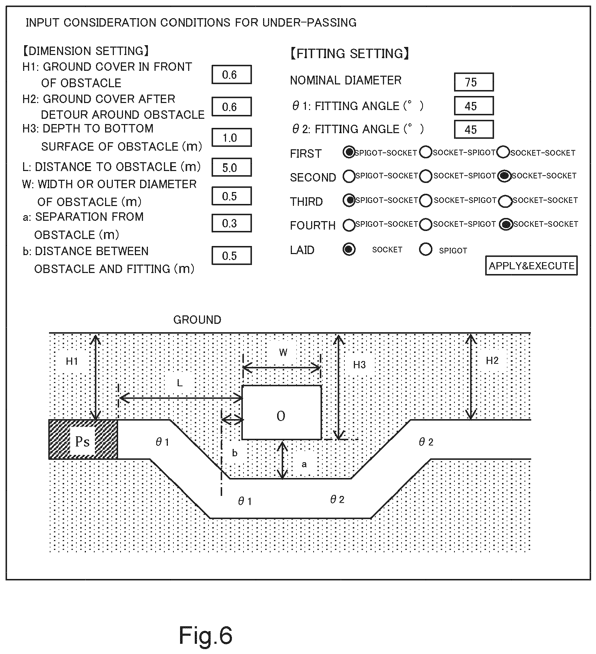

Fig. 6 illustrates the guide screen corresponding to the under-passing piping.

The detour design information guided by the guide screen includes: obstacle location information indicating a relative position of the obstacle to a reference plane according to the aspect of the detour route; detour route location information indicating a relative position of the detour route including at least one bending point at a relative position to the reference plane so as to be able to avoid the obstacle; and pipe type information including at least an angle of the fitting and joint information constituting the detour route.

It is necessary to vary the aspect of the detour route depending on the obstacle and for this purpose, the reference plane is set as a reference. In a case that the aspect of the detour route is the under-passing or the over-passing, the reference plane is set to the ground G; in a case that the aspect of the detour route is the horizontal, the reference plane is set to a vertical plane V perpendicular to the ground; and in a case that the aspect of the detour route is the composite angle in horizontal and vertical, the reference plane is set to an inclined plane at a given angle θ to the ground G or the vertical plane V perpendicular to the ground. The angle θ is set by the operator.

As shown in Fig. 6, an input field for the detour design information is arranged in the upper part of the guide screen, and a guide field of the detour design information regarding the detour route is arranged in the lower part of the guide screen. The operator will visually confirm variables H1, H2, L, a, b, ... etc. displayed in the guide field and input corresponding numerical values to the input field.

As shown in Fig. 4A, the under-passing piping refers to piping in which two fittings (bent pipes) are arranged on upstream and downstream sides of the obstacle O respectively along a laying direction of the pipe, and a straight pipe and a cut pipe are used to connect the respective fittings (bent pipes), thereby taking a detour under the obstacle O. For such under-passing piping, a depth H3 from the ground to the bottom surface of the obstacle, and a width or an outer diameter W in the laying direction of the pipe are input as the obstacle location information, while a ground cover H1 over the established pipeline as a connection source (ground cover in front of the obstacle as seen from a design start point), a ground cover H2 over the pipeline behind the detour (ground cover after taking the detour around the obstacle), a distance L from a pipe end of the established pipe to the obstacle O along the laying direction, a distance a from the obstacle O to the under-passing piping in a depth direction, and a length b between the obstacle O and the fitting located at the deepest part of the under-passing piping are input as the detour route location information. These values may be predetermined by a client.

Furthermore, as pipe attributes of the four fittings (bent pipes), a nominal diameter, fitting angles θ1, θ2, and an aspect of connection (specifically, distinction between spigot-socket, socket-spigot, and socket-socket (double socket pipe)) are designated. The aspect of connection can be selected considering stock of the fitting held at the construction site. The fitting angle θ1 is an angle of the two fittings (bent pipes) upstream of the obstacle O, whereas the fitting angle θ2 is an angle of the two fittings (bent pipes) downstream of the obstacle O. The same value is input for the angle θ1 of the two fittings (bent pipes) on the upstream side, and the same value is input for the angle θ2 of the two fittings (bent pipes) on the downstream side. However, different values can be input for the angle θ1 and the angle θ2.

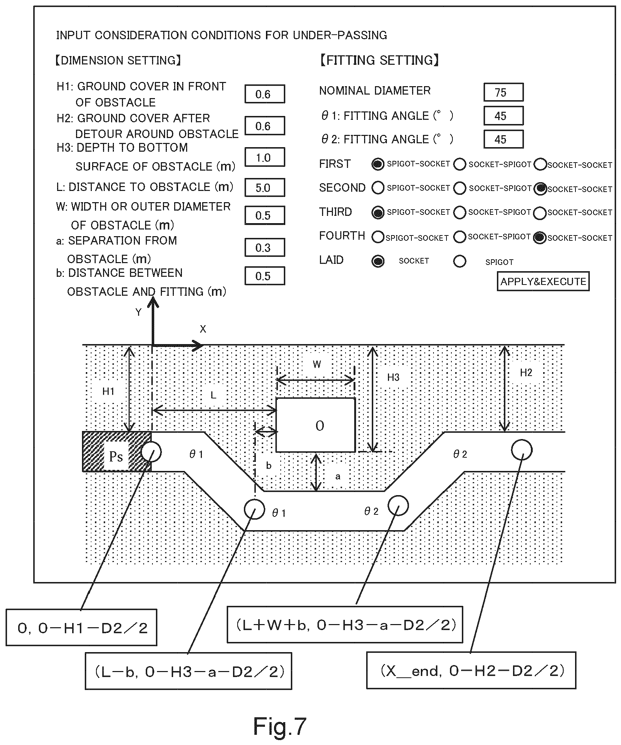

When the operator finishes inputting the detour design information and touches the command display unit, "apply and execute" (see Fig. 6), the detour route generation processing unit 14 first calculates coordinates of points (indicated by white circles in Fig. 7) determined by positional relation between the pipe and the obstacle O regardless of the values of the angles θ1, θ2 of the fittings (bent pipes).

As shown in Fig. 7, coordinates of a design base point as a connecting part with the established pipe Ps (0, 0-H1-D2/2), coordinates of the fitting arranged below and upstream of the obstacle O (L-b, 0-H3-a-D2/2), coordinates of the fitting arranged below and downstream of the obstacle O (L+W+b, 0-H3-a-D2/2), and coordinates of a design end point (X_end, 0-H2-D2/2) are calculated. Here, the origin is an intersection point of a vertical line at the design base point and the ground, a Y-axis corresponds to the vertical line, and an X-axis corresponds to the laying direction of the pipe along the ground. D2 is the outer diameter of the pipe and X_end is a position where the two straight pipes are arranged (the number is not particularly limited).

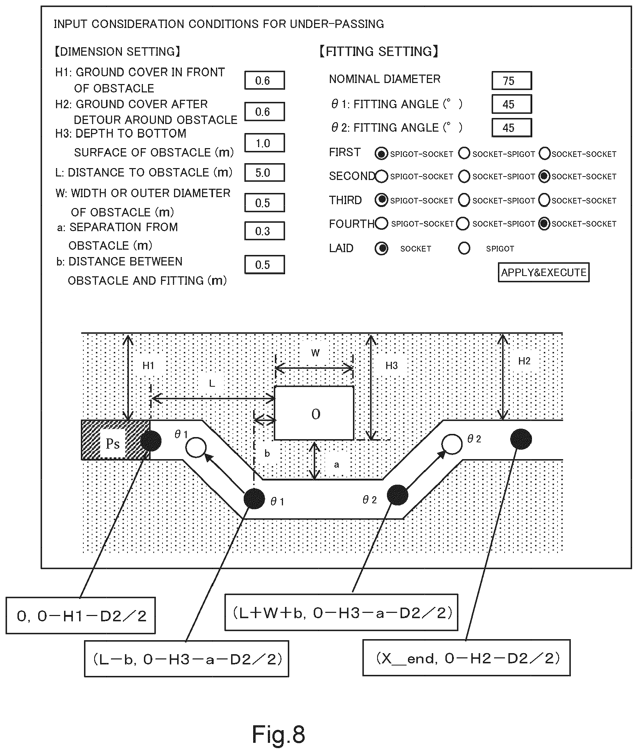

Next, the detour route generation processing unit 14 calculates not-set coordinates considering the angles θ1, θ2 of the fittings (bent pipes) as previously input. In Fig. 8, based on the coordinates of the points indicated by black circles as previously calculated and the angles θ1, θ2 of the fittings (bent pipes), coordinates of points indicated by white circles, that is, coordinates of the fitting arranged above and upstream of the obstacle O and the fitting arranged above and downstream of the obstacle O are calculated.

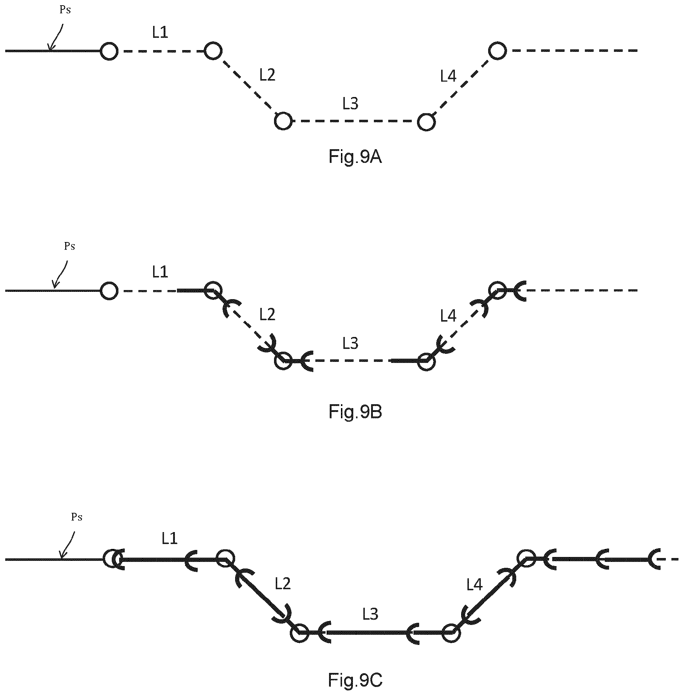

As shown in Fig. 9A, the detour route generation processing unit 14 calculates lengths of respective sections L1, L2, L3, and L4 based on the calculated coordinates of the respective points, and then arranges the fittings (bent pipes) designated by the detour design information as shown in Fig. 9B.

Furthermore, as shown in Fig. 9C, the detour route generation processing unit 14 calculates the number of the straight pipes and the length of the cut pipe arranged between the design base point as the connecting part with the established pipe Ps and the design end point based on the lengths of the respective sections L1, L2, L3, and L4 as well as the lengths of the fittings (bent pipes), and arranges the straight pipes and the cut pipe between the design base point and the design end point. In this manner, the under-passing piping is automatically generated.

The detour route generation processing unit 14 evaluates whether or not the under-passing piping thus generated satisfies predetermined evaluation criteria, and when it does not satisfy, displays a warning thereof to prompt re-input of the detour design information.

For example, when a part having the pipe connection aspect of spigot-spigot exists in the under-passing piping, it is warned that a joint ring is required. Additionally, when the length of the cut pipe constituting the detour route is shorter than a predetermined minimum length, it is warned that construction is difficult.

Note that described in the above embodiment is the case where the connecting part with the established pipe Ps is on the upstream side of the obstacle O. However, even in a case where the connecting part with the established pipe Ps exists on the downstream side of the obstacle O in addition to the upstream side thereof, the lengths of the straight pipes and the cut pipe can be calculated in the same manner as described above by inputting the coordinates of the connecting part on the downstream side, and the detour pipeline can be designed by further applying a joint ring to the connecting part.

In other words, the detour route generation processing unit 14 calculates the route length of the detour route based on the detour design information, and arranges the fitting at the bending point of the detour route and the straight pipe and the cut pipe in a section excluding the fitting, thereby generating the detour route; and outputs a warning to the operator when the length of the cut pipe constituting the detour route is shorter than the predetermined minimum length, and prompts the operator to update the detour design information. When the detour design information is updated by the operator who has recognized the warning, it is possible to generate a new detour route. Any of the obstacle location information, the detour route location information, and the pipe type information regarding the fitting as described above is to be changed.

While the under-passing piping is described above, in a case of the over-passing piping, the depth H3 from the ground to the top surface of the obstacle is input, instead of the depth H3 from the ground to the bottom surface of the obstacle, as the obstacle location information, while the distance a from the obstacle O to the over-passing piping in the depth direction, and the length b between the obstacle O and the fitting located at the shallowest part of the over-passing piping are input as the detour route location information. Added to the evaluation criteria of the over-passing piping is that the ground cover over the straight pipe arranged at the shallowest part of the over-passing piping becomes equal to or greater than a predetermined depth.

Furthermore, in a case that the aspect of the detour route is the horizontal piping, the obstacle location information and the detour route location information are set for the reference plane which is set to the vertical plane perpendicular to the ground. In this case, the reference plane may be specified by the distance to the obstacle O in a horizontal direction. In a case that the aspect of the detour route is the composite angle in horizontal and vertical, for example, an inclination angle of the reference plane is preferably set to be along a longitudinal direction of the obstacle O.

Although described is the piping design support device that generates a detour route during laying work such as connecting new piping to established piping at a construction site, the piping design support device as described above can also be used in generating a detour route to avoid a known obstacle existing underground when designing piping to connect new piping to designed piping at an architect office or the like. That is, the piping design support device according to the present invention is a piping design support device that updates a laying route of a newly laid pipeline to be connected to an existing pipeline including an established pipeline and a designed pipeline.

The piping design support device 10 can be configured with a mobile device such as a smartphone and a laptop computer, other than a tablet computer. Additionally, the piping design support device 10 may be implemented in an aspect where all or some of the functional blocks of the piping diagram generation unit 11, which are the functional blocks constructed in the mobile device, are embodied with an application program interface (API) operating in conjunction with a cloud server equipped with the application program for supporting piping design, or may be configured as a standalone type in which the functional blocks complete the operation only in the mobile device. Note that even the standalone type is preferably configured such that information regarding the generated detour route is stored in the database 20 through the communication processing unit 17 or uploaded to a server computer for managing the laid pipeline.

The foregoing embodiment is merely one aspect of the present invention and the description thereof is not intended to limit the technical scope of the present invention, not to mention that the embodiment can be modified and designed as appropriate to the extent that the operations and effects of the present invention can be obtained.

### Reference Signs List

10: Piping design support device
10A: Display unit
10B: Input unit
11: Piping diagram generation unit
12: Guide screen generation unit
13: Detour design information input processing unit
14: Detour route generation processing unit
15: Laying route update processing unit
16: Storage unit
17: Communication processing unit
18: Display processing unit
19: Input processing unit
20: Database

## Claims

1. A piping design support device that updates a laying route of a newly laid pipeline to be connected to an existing pipeline, comprising:
a guide screen generation unit that generates a guide screen to guide detour design information necessary for generating a detour route to make a detour around an obstacle when the obstacle exists in a preset laying route;
a detour design information input processing unit that displays the guide screen generated by the guide screen generation unit to prompt input of the detour design information;
a detour route generation processing unit that generates and displays the detour route based on the detour design information input in the detour design information input processing unit; and
a laying route update processing unit that updates the laying route with the detour route generated by the detour route generation processing unit.

2. The piping design support device according to claim 1, wherein
a reference plane is preset according to an aspect of the detour route, and
the detour design information guided by the guide screen includes:
obstacle location information indicating a relative position of the obstacle to the reference plane;
detour route location information indicating a relative position of the detour route including at least one bending point at a relative position to the reference plane so as to be able to avoid the obstacle; and
pipe type information including at least an angle of a fitting and joint information constituting the detour route.

3. The piping design support device according to claim 2, wherein the detour route generation processing unit calculates a route length of the detour route based on the detour design information, and arranges the fitting at the bending point of the detour route and a straight pipe and a cut pipe in a section excluding the fitting, thereby generating the detour route.

4. The piping design support device according to claim 3, wherein the detour route generation processing unit outputs a warning to an operator when a length of a cut pipe constituting the detour route is shorter than a predetermined minimum length, and prompts the operator to update the detour design information.

5. The piping design support device according to any one of claims 2 to 4, wherein in a case that an aspect of the detour route is an under-passing or an over-passing, the reference plane is set to a ground; in a case that the aspect of the detour route is a horizontal, the reference plane is set to a vertical plane perpendicular to the ground; and in a case that the aspect of the detour route is a composite angle in horizontal and vertical, the reference plane is set to an inclined plane at a given angle to the ground or the vertical plane perpendicular to the ground.
